(19) Europäisches Patentamt
European Patent Office
Office européen des brevets

(11) Veröffentlichungsnummer: **0 268 040 B1**

(12) **EUROPÄISCHE PATENTSCHRIFT**

(45) Veröffentlichungstag der Patentschrift: **22.01.92**

(51) Int. Cl.[5]: **C08L 25/04**, C08L 33/06, //(C08L25/04,33:06),(C08L33/06, 25:04)

(21) Anmeldenummer: **87113794.9**

(22) Anmeldetag: **22.09.87**

Teilanmeldung 91111549.1 eingereicht am 11/07/91.

Die Akte enthält technische Angaben, die nach dem Eingang der Anmeldung eingereicht wurden und die nicht in dieser Patentschrift enthalten sind.

# (54) Verträgliche Polymermischungen.

(30) Priorität: **24.09.86 DE 3632369**

(43) Veröffentlichungstag der Anmeldung: **25.05.88 Patentblatt 88/21**

(45) Bekanntmachung des Hinweises auf die Patenterteilung: **22.01.92 Patentblatt 92/04**

(84) Benannte Vertragsstaaten: **DE ES FR GB IT NL**

(56) Entgegenhaltungen: **DE-A- 3 436 476**

(73) Patentinhaber: **Röhm GmbH**
**Kirschenallee Postfach 4242**
**W-6100 Darmstadt 1(DE)**

(72) Erfinder: **Siol, Werner, Dr.**
**Goerdeler Weg 34**
**W-6100 Darmstadt(DE)**
Erfinder: **Terbrack, Ulrich**
**Berliner Strasse 3**
**W-6107 Reinheim 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 268 040 B1

## Beschreibung

Gegenstand der Erfindung

Die Erfindung betrifft verträgliche Polymermischungen (Polymer Blends) aus einer Cyclohexyl(meth)-acrylat als Monomeres enthaltenden Polymerkomponente und einer Styrol als Monomeres enthaltenden Polymerkomponente.

Stand der Technik

In der Regel gelten unterschiedliche Polymerspecies als nicht miteinander verträglich, d.h. unterschiedliche Polymerspecies bilden bis hinab zu geringen Anteilen einer Komponente im allgemeinen keine homogene Phase aus, die durch völlige Mischbarkeit der Komponenten charakterisiert wäre.
Gewisse Ausnahmen von dieser Regel haben zunehmendes Interesse speziell bei den mit der theoretischen Deutung der Phänomene befaßten Fachleute hervorgerufen. Völlig kompatible Mischungen von Polymeren zeigen völlige Löslichkeit (Mischbarkeit) in allen Mischungsverhältnissen.

Eine zusammenfassende Darstellung uber mischbare Polymersysteme findet sich z.B. bei D.R. Paul et al. in Polymer & Engineering Science 18, (16) 1225 - 34 (1978); J. Macromol. Sci.-Rev. Macromol. Chem. C. 18 (1) 109 - 168 (1980).

Zum Nachweis der Mischbarkeit wurde häufig die Glastemperatur Tg oder die sogenannte "Optische Methode" (Klarheit eines aus homogener Lösung des Polymergemischs gegossenen Films) herangezogen. (Vgl. Brandrup-Immergut, Polymer Handbook, Ed., III-211-2113). Als ein weiterer Test auf die Mischbarkeit von unter sich verschiedenen Polymeren wird das Auftreten der unteren kritischen Lösungstemperatur (Lower Critical solution Temperature = LCST) herangezogen. (Vgl. DE-A 34 36 476 und DE-A 34 36 477) Das Auftreten der LCST beruht auf dem Vorgang, daß sich beim Erwärmen die bis anhin klare, homogene Polymermischung in Phasen auftrennt und optisch trübe bis opak wird. Dieses Verhalten stellt nach der Literatur einen eindeutigen Beweis dafür dar, daß die ursprüngliche Polymermischung aus einer einzigen, im Gleichgewicht befindlichen homogenen Phase bestanden hatte. Beispiele für vorhandene Mischbarkeit stellen z.B. die Systeme Polyvinylidenfluorid mit Polymethylmethacrylat (PMMA) oder mit Polyethylmethacrylat dar. (US-PS 3 253 060 US-PS 3 458 391, US-PS 3 459 834). Neuere Ergebnisse über "Polymer Blends" und mögliche Anwendung derselben werden von L.M. Robeson in Polym. Engineering & Science 24 (8) 587 - 597 (1984) berichtet.
Copolymere aus Styrol und Maleinsäureanhydrid, sowie aus Styrol und Acrylnitril sind unter gewissen Voraussetzungen mit Polymethylmethacrylat (PMMA) verträglich (DE-A 20 24 940). Hervorgehoben wurden die verbesserten Gebrauchseigenschaften von Formmassen dieser Typen. Ebenso sind Copolymere aus Styrol und zur Wasserstoffbrückenbindung befähigte Hydroxylgruppen Monomeren bei bestimmter Zusammensetzung mit Polymethacrylaten verträglich, so z.B. Copolymere aus Styrol und p-(2-Hydroxylhexafluoroisopropyl)styrol [B.Y. Min and Eli M. Pearce, Organic Coatings and Plastics Chemistry, 45, (1981) 58 - 64, oder Copolymere aus Styrol und Allylalkohol (F. Cangelosi and M.T. Shaw, Polymer Preprints (Am. Chem. Soc., Div. Polym. Chem.) 24, (1983), 258 -259].
Polystyrol selbst sowie andere Styrol enthaltende Polymere gelten hingegen als mit Polymethylmethacrylat unverträglich. So wird von Shaw, M.T. and Somani, R.H. eine Mischbarkeit von nur 3,4 ppm (PMMA mit einem Molekulargewicht von 160 000) bzw. von 7,5 ppm (PMMA mit einem Molekulargewicht von 75 000) mit Polystyrol angegeben [Adv. Chem. Ser. 1984, 206 (Polym. Blends Compos. Multiphase Syst.), 33 - 42] (CA 101 : 73417 e).
Sogar sehr niedermolekulares Polystyrol ist mit PMMA wenig verträglich. So ergibt bereits eine Mischung aus 20 % eines extrem niedermolekularen Styrol-Oligomeren (MW : 3 100) kein klares Produkt mehr. Bei einem ebenfalls noch sehr niedrigen Molekulargewicht von 9 600 ist sogar eine nur 5 %-ige Lösung von Polystyrol in PMMA nur noch translucent. (Raymond R. Parent and Edward V. Tompson, Journal of Polymer Science: Polymer Physics Edition, Vol. 16, 1829 bis 1847 (1978)).
Ebensowenig sind andere Polymethacrylate und Polyacrylate mit Polystyrol zu transparenten Kunststoffen abmischbar. Dies gilt z.B. für Polyethylmethacrylat, Polybutylmethacrylat, Polyisobutylmethacrylat, Polyneopentylmethacrylat, Polyhexylmethacrylat und viele andere. Vgl. auch R.H. Somani and M.T. Shaw, Macromolekules 14, 1549 - 1554 (1981). Mechanische Abmischungen von Polymeren (Polyblends) haben in bestimmten Fällen und auf bestimmten Gebieten der Kunststoffindustrie zu eigenschaftsmäßig verbesserten Kunststoffprodukten geführt (vgl. Kirk-Othmer 3rd Ed. Vol. 18, pp 443 - 478, J. Wiley 1982). Die physikalischen Eigenschaften solcher "Polyblends" stellen gewöhnlich einen Kompromiß dar, der unter dem Strich eine Verbesserung gegenüber den Eigenschaften der individuellen Polymeren bedeuten kann.

Dabei haben
**multiphasische** Polymermischungen eine ungleich größere kommerzielle Bedeutung erlangt als verträgliche Mischungen (vgl. Kirk-Othmer loc.cit. pg 449)

Aufgabe und Lösung

Multiphasische und verträgliche Polymermischungen sind somit sowohl hinsichtlich ihrer physikalischen als auch ihrer anwendungstechnisch relevanten, insbesondere ihrer optischen Eigenschaften (Transparenz, Klarheit usw.) streng auseinanderzuhalten. Wie bereits ausgeführt, setzt öfters mangelnde Verträglichkeit dem Abmischen von Kunststoffen mit dem Ziel, dadurch ein verbessertes Gesamt-Eigenschaftsspektrum zu erreichen, enge Grenzen. Dies schien auch für die beiden Polymerklassen der Polystyrole und der Polyalkyl(meth)acrylate zuzutreffen. [Vgl. W.A. Kruse et al. Makromol. Chem. 177, 1145 (1976), sowie R.H. Somani and M.T. Shaw, Macromolecules 14, 1549 bis 1554 (1981)]. Es wurde nun gefunden, daß überraschenderweise Mischungen aus Polystyrolen und Polycyclohexylmethacrylat oder Polycyclohexylacrylat miteinander verträglich sind.
Die vorliegende Erfindung betrifft daher verträgliche Polymermischungen PM aus zwei verschiedenen Polymerkomponenten

A) 0,1 bis 99,9 Gew.-% eines Polystyrols das zu wenigstens 20 und bis zu 100 Gew.-% aus Styrol und 80 bis 0 Gew.-% an weiteren mit Styrol copolymerisierbaren Monomeren aufgebaut ist, (=Polymer A) und

B) 99,9 bis 0,1 Gew.-% eines Poly(meth)acrylats das zu mindestens 10 und bis zu 100 Gew.-% aus den Monomeren der Formel I

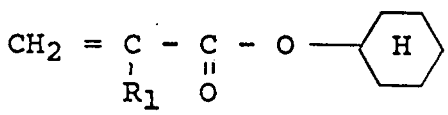

I

worin $R_1$ für Wasserstoff oder Methyl steht und 90 bis 0 Gew.-% an weiteren mit den Monomeren der Formel I copolymerisierbaren Monomeren aufgebaut ist (=Polymer B) mit der Maßgabe, daß das Polymer A allenfalls einen α-Methyl-Styrolgehalt unter 20 Gew.-% besitzt und daß der Anteil der sehr polaren Monomeren gebildet aus der Gruppe bestehend aus (Meth)Acrylnitril Maleinsäureanhydrid, Maleinsäureimid, p-(2-Hydroxylhexafluoroisopropyl) styrol und Allylalkohol unter 10 Gew.-% liegt

Wie aus dem weiteren hervorgeht sind Polymer A und Polymer B stets vom Typ her gemäß ihren bestimmenden Komponenten eindeutig voneinander verschieden, so daß nach den Erfahrungen des Standes der Technik Kompatibilität nicht zu erwarten war. Vorzugsweise macht die Summe der Polymerkomponenten A) plus B) einhundert Prozent der gesamten Polymeren in der Mischung PM aus, wobei die Polymermischung PM jedoch im weiteren unter Umständen anstelle eines einheitlichen Polymeren eingesetzt, d.h. in Kombination mit weiteren Polymeren verarbeitet werden kann.
Die Verträglichkeit der erfindungsgemäß herzustellenden Abmischungen aus dem Polystyrol gemäß A) und dem Poly(meth)acrylat gemäß B) kommt umso uberraschender, als Polystyrole mit anderen Polymethacrylaten und Polyacrylaten in der Regel keine verträglichen Mischungen bilden.

Nach vorliegenden Befunden ist die Verträglichkeit der aus A) und B) gebildeten Mischungen sogar so gut, daß bei einer Temperatur von 200 Grad C und darüber keine Entmischung eintritt. Besonders erwähnt seien die Polymermischungen aus Polystyrol als Polymerkomponente A) und Polycyclohexylacrylat oder Polycyclohexylmethacrylat als Polymerkomponente B) (= Polymermischung PM1), Die ausgezeichnete Verträglichkeit dieser Polymermischung PM1 läßt eine weitgehende Variationsbreite zu sowohl hinsichtlich des Mischungsverhaltnisses als auch der Mischungspartner. Dies gilt insbesondere fur reines Polystyrol als Polymer A. So ist es einerseits möglich, die Polymerkomponente B) durch Copolymerisation mit geeigneten Monomeren weitgehend zu variieren. Andererseits läßt sich auch die Polymerkomponente A) im gewissen Rahmen durch Copolymerisation mit geeigneten Monomeren verändern, ohne daß die Verträglichkeit verloren geht. Passende Comonomere finden sich z.B. im Kunststoff-Handbuch, Herausgeber R. Vieweg u. G. Daumiller, Band V, Carl Hanser Verlag 1969, S. 104 - 108. Geeignete Comonomere für die Komponente B) sind Acryl- bzw. Methacrylsäureester, im allgemeinen solche von nicht alicyclischen Alkoholen mit 1 - 12 Kohlenstoffatomen, insbesondere Alkanolen. Daneben Acryl- und Methacrylsäureester von gegebenenfalls substituierten cyclischen Alhoholen mit 4, 5, 7, 8, 9, 10, 11 oder 12 Kohlenstoffatomen im Ring sowie Acryl- und Methacrylsäureester von substituierten Cyclohexanolen mit insgesamt 7 bis 12 Kohlenstoffatomen.

Unter den gegebenenfalls vorhandenen Substituenten seien insbesondere $C_1$ - $C_4$-Alkylreste verstanden.

Des weiteren kommen andere mit Cyclohexyl(meth)acrylat copolymerisierbare Monomere als Comonomere in Frage. Besonders genannt sei das Methylmethacrylat als Comonomeres. Der Anteil von Cyclohexylacrylat und/oder Cyclohexylmethacrylat am Gehalt der Polymerkomponente B liegt in der Regel im Bereich 100 - 10 Gew.-%, besonders bevorzugt im Bereich von 90 - 20 Gew.-% und ganz besonders bevorzugt im Bereich von 80 - 30 Gew.-%.

Ebenso ist nach vorliegenden Befunden ein wechselseitiger Ersatz der unter der allgemeinen Formel I einerseits bzw. der unter der allgemeinen Formel II

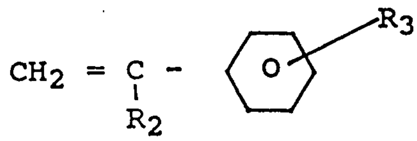

II

worin $R_2$ für Wasserstoff oder Methyl und $R_3$ für einen Alkylrest $C_nH_{2n+1}$ mit n = 1 - 8 steht, andererseits zulässigen Monomeren untereinander möglich.

Der Anteil der Monomeren der Formel II an der Polymerkomponente A liegt - falls vorhanden- im Bereich 1 - 20 Gew.-%.

So kann das Styrol im Polymerisat A) zu einigen Gew.-%, z.B. 10 Gew.-% durch p-Methylstyrol substituiert werden. Darüber hinaus ist im gewissen Umfang ein Austausch des Styrols durch andere alkylsubstituierte, insbesondere $C_1$ -$C_4$-alkylsubstituierte Styrole wie beispielsweise m-Methylstyrol, p-tert. Butyl-Styrol, $\alpha$-Methylstyrol möglich. In der Regel ist der Anteil an diesen Monomeren kleiner als 20 Gew.-%. Ebenso kann das Styrol durch Ester der Acrylsäure und der Methacrylsäure teilweise ersetzt werden, vor allem durch Ester von $C_1$ - $C_{18}$-Alkoholen, vorzugsweise von $C_1$ - $C_8$-Alkanolen. Ferner kann das Styrol in untergeordneter Menge durch andere Vinylverbindungen, insbesondere Vinylester ersetzt werden, wie z.B. Vinylacetat und Vinylpropionat.

Dabei ist darauf zu achten, daß der Styrolgehalt an der Polymerkomponente A wenigstens 20 Gew.-%, bevorzugt jedoch wenigstens 50 Gew.-%, besonders bevorzugt wenigstens 90 Gew.-% und ganz besonders bevorzugt wenigstens 99 Gew.-% ausmacht.

Während die Polymerkomponente A mit anderen hydrophoben Vinylverbindungen also weitestgehend modifiziert werden kann, ist der Anteil an sehr polaren Monomeren, wie z.B. (Meth)Acrylnitril, Maleinsäureanhydrid, Maleinsäureimiden, p-(2-Hydroxylhexafluoroisopropyl)styrol oder Allylalkohol sehr begrenzt. Der Anteil dieser polaren Monomeren sollte von 0 bis unter 10 Gew.-%, insbesondere unter 5 Gew.-% an der Polystyrolkomponente A) betragen. Besonders bevorzugt sind solche Polymere A, die weniger als 0,1 Gew.-% dieser polaren Monomeren enthalten, vorzugsweise 0 Gew.-%. Gleichermaßen kann im Polymerisat B) das Cyclohexylmethacrylat durch Cyclohexylacrylat ersetzt werden.

Die Variationen werden sich dabei in aller Regel nach den Erfordernissen des jeweiligen Einsatzgebietes richten. So wird der Cyclohexylacrylat- und/oder der Cyclohexylmethacrylatgehalt eines Polymeren B, das in hohen Gewichtsanteilen beispielsweise zur Modifizierung des Brechungsindex im reinen Polystyrol eingesetzt werden soll, höher sein, in der Regel deutlich größer als 20 Gew.-% oder bevorzugt deutlich größer als 30 Gew.-%, als der Cyclohexyl(meth)acrylatgehalt eines Polymeren B, das mit Polymeren A beispielsweise nur bei Raumtemperatur verträglich sein soll, bei erhöhter Temperatur jedoch wieder Phasentrennung (also Unverträglichkeit) aufweisen soll.

In der Regel ist eine Verträglichkeit der Polymeren A mit den Polymeren B auch dann noch gegeben, wenn auch das Polymere A Cyclohexyl(meth)acrylat und/oder das Polymere B auch Styrol enthält. Dabei ist der Styrolgehalt des Polymeren A jedoch deutlich höher als der Styrolgehalt des Polymeren B. In der Regel ist die Differenz des Styrolgehalts (Gew.-% Styrol in Polymer A minus Gew.-% Styrol im Polymer B) größer als 10 Gew.-%, bevorzugt größer als 30 Gew.-%, besonders bevorzugt größer als 50 Gew.-% und ganz besonders bevorzugt größer als 90 Gew.-%.

Ebenso ist der Cyclohexyl(meth)acrylatgehalt des Polymeren B deutlich höher als der Cyclohexyl(meth)-acrylatgehalt des Polymeren A. So enthält Polymer A in der Regel weniger als 5 Gew.-% Cyclohexyl(meth)acrylat, bevorzugt weniger als 0,1 Gew.-%. Für den Fall, daß auch Polymer A Cyclohexyl(meth)acrylat enthält, gilt, daß der Quotient: (Gehalt an Cyclohexyl(meth)acrylat in Polymer B/ Gehalt an Cyclohexyl(meth)acrylat in Polymer A) > 2, bevorzugt > 5 und ganz besonders bevorzugt > 10 ist.

Ferner gilt, daß der Gehalt an Monomeren der Formel I im Polymer B und der Gehalt an Styrol im

Polymeren A vor allem dann gering sein kann, wenn die übrigen Monomerbausteine im Polymer A und im Polymer B chemisch weitgehend übereinstimmen.

Die **Charakterisierung** der erfindungsgemäßen Polymermischungen PM als **verträgliche** Mischungen erfolgt nach den anerkannten Kriterien (Vgl. Kirk-Othmer, loc.cit, Vol 18, pp 457 - 460; J. Brandrup, E.H. Immergut, Polymer Handbook, 2. Ed. J. Wiley 1975, pg. III-211)

a) Bei Anwendung optischer Verfahren beobachtet man bei den erfindungsgemäßen Polymermischungen PM einen **einzigen Brechungssindex,** der zwischen denen der beiden Polymerkomponenten A) und B) liegt.

b) Die Polymermischungen PM besitzen eine einzige Glasübergangstemperatur Tg (die zwischen der der Polymerkomponenten liegt)

Herstellung der Polymerisate A) und B)

Die Herstellung der Polymerisate A) und B) kann nach den bekannten Regeln der Polymerisation und nach bekannten Verfahren erfolgen. Die Polymeren vom Typ A) können z.B. nach Houben-Weyl, Methoden der Organischen Chemie, 4. Auflage, Bd. XIV/I, pp 761 - 841, Georg Thieme-Verlag (1961) hergestellt werden. Sie sind auch in geeigneter Form im Handel erhältlich. Dabei kann vorzugsweise das radikalische, aber auch ionische Polymerisationsverfahren zur Anwendung kommen. Die Molgewichte $\overline{M}$ der erfindungsgemäß eingesetzten Polymeren A) liegen in der Regel oberhalb von 3 000, vorzugsweise ab oder oberhalb von 5 000, besonders bevorzugt im Bereich von 5 000 bis 1 000 000, insbesondere von 20 000 bis 500 000, (Bestimmung durch Lichtstreuung). Es sei indessen betont, daß die Molgewichte die Eignung als Komponente in den verträglichen Polymermischungen PM nicht kritisch zu beeinflussen scheinen. Dies gilt sowohl für die Homo- als auch die Copolymerisate der Typen A) und B). Für eine Verträglichkeit von Polymer A und Polymer B ist die Taktizität der Polymeren von gewisser Bedeutung. In der Regel ist insbesondere ein Polymeres B mit einem geringen Anteil an isotaktischen Triaden (wie es beispielsweise durch radikalische Polymerisation erhalten wird) gegenüber Polymeren mit einem hohen isotaktischen Anteil, wie es durch spezielle ionische Polymerisation erzeugt wird, bevorzugt.

Die Herstellung der Homo- bzw. Copolymerisate B) erfolgt nach bekannten Verfahren.(Vgl. H. Rauch-Puntigam, Th. Völker Acryl- und Methacrylverbindungen, Springerverlag 1967). Wenn auch prinzipiell eine Herstellung durch anionische Polymerisation oder Group-Transfer-Polymerisation (siehe auch O.W. Webster et al., J. Am. Chem. Soc., 105, 5706 (1983)) möglich ist, so ist doch die bevorzugte Herstellungsform die radikalische Polymerisation.

Die Molgewichte $\overline{M}$ der Polymerisate B) liegen in der Regel oberhalb von 3 000, vorzugsweise ab oder oberhalb von 5 000, im allgemeinen vorzugsweise im Bereich von 10 000 bis 1000 000, besonders vorzugsweise 20 000 bis 500 000, insbesondere 20 000 bis 300 000 (Lichtstreuung). Bei der Auswahl der Monomerkomponenten, die als Comonomere bei B) eingesetzt werden sollen, ist darauf zu achten, daß die Glastemperatur Tg des resultierenden Polymerisats die technische Anwendbarkeit des Gesamtsystems PM nicht einschränkend beeinflußt.

So soll für die Herstellung von Formkörpern aus der Polymermischung PM wenigstens eines der Polymern A und B eine Glastemperatur Tg > 70 Grad C aufweisen, bevorzugt ist für diese Anwendung, daß auch die Polymermischung PM eine Glastemperatur Tg > 70 Grad C aufweist. Diese Einschränkung gilt bevorzugt für die Herstellung von spritzgegossenen, gepressten bzw. extrudierten Gegenständen aus der Polymermischung PM. Für andere Anwendungsgebiete, beispielsweise für Lacke, für Elastomere oder für eine reversible thermotrope Verglasung (Polymermischung mit Trübungspunkt beim Erwärmen) also für eine Anwendung gemäß DE-A 34 36 477, sind jedoch solche Polymermischungen PM bevorzugt, die eine Polymerkomponente B mit einer Glastemperatur Tg < 40 Grad C oder bevorzugt < 20 Grad C aufweisen.

Herstellung der Mischungen PM

Die verträglichen Mischungenen PM können durch die unterschiedlichen Verfahren hergestellt werden, sie werden z.B. durch intensives mechanisches Vermischen der Komponenten A) und B) in der Schmelze oder im Extruder erzeugt; oder sie können auch aus einem gemeinsamen Lösungsmittel heraus als sogenannte "solution cast polyblends" hergestellt werden. (Vgl. Kirk-Othmer "Encyclopedia of Chemical Technology" 3rd. Ed. Vol. 18, pg. 443 - 478, J. Wiley, 1982). Auch kann so vorgegangen werden, daß Polymer A in der Monomermischung des anderen Polymeren B aufgelöst wird und anschließend in Gegenwart von Polymer A erzeugt wird. Umgekehrt kann natürlich auch Polymer A in Gegenwart des Polymeren B erzeugt werden. Ebenso kann die Polymermischung PM aus gemeinsamen Fällungsmitteln erzeugt werden. Der Mischungsart sind keine Grenzen gesetzt.

Man erzeugt in der Regel zunächst Mischungen der Komponenten A) und B) wobei vorteilhaft von Feststoffen in Form beispielsweise eines Perlpolymerisats oder eines Granulats ausgegangen wird unter Verwendung langsam laufender Mischaggregate wie z.B. Trommel-, Rhönrad-, Doppelkammer-Pflugscharmischern. Die langsam laufenden Mischaggregate verursachen ein mechanisches Mischen, ohne daß die Phasengrenzen aufgehoben werden. (Vgl. Ullmanns Encyklopädie der Technischen Chemie, 4. Auflage, Bd. 2, pg. 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 300 Grad C in Knetern oder vorzugsweise Extrudern, z.B. Ein- oder Mehrschneckenextrudern oder gegebenenfalls in Extrudern mit oszillierender Schnecke und Scherstiften (z.B. im®BUSSCO-Kneter).
Man kann nach diesen Verfahren Gleichkorngranulate (z.B. Heißabschlag, Würfelform, Rundkorn) herstellen. Die Korngröße der Granulate liegt dabei im Bereich 2 bis 5 mm. Eine weitere, einfache Methode zur Erzeugung der Polymerverbindungen PM ist das Abmischen von Polymerdispersionen (enthaltend Polymerkomponente A) und Polymerdispersionen, enthaltend die Polymerkomponente B). Diese Dispersionsmischungen können gemeinsam koaguliert werden, gemeinsam sprühgetrocknet werden oder gemeinsam auf einem Extruder abgequetscht werden. Andererseits können die Dispersionsmischungen auch gemeinsam zu einem Film aufgetrocknet werden.

Vorteilhafte Wirkungen der Mischungen PM

Die erfindungsgemäßen verträglichen Polymermischungen PM weisen insbesondere die nachfolgenden Vorteile auf, die die entsprechenden technischen Einsatzmöglichkeiten nahelegen, wobei "Polystyrol" bzw. "Polycyclohexyl(meth)acrylat" jeweils stellvertretend für die unter die Polymeren A) bzw. B) fallenden Möglichkeiten aufgeführt sei.

1) Zunächst sind die Polymermischungen - im Unterschied zu Mischungen aus anderen Poly(meth)-acrylaten und Polystyrolen - verträglich. D.h. die erfindungsgemäßen Polymermischungen sind im nicht pigmentierten Zustand im Unterschied zu nicht verträglichen Polystyrol/Poly(meth)acrylatabmischungen glasklar (sie zeigen keine Lichtstreuung, d.h. in der Regel ist der Haze < 10 %). Erfindungsgemäß sind aber auch solche Mischungen, die nur bei Raumtemperatur verträglich sind, bei Temperaturerhöhung jedoch Entmischung zeigen.

2. Mischungen aus Polystyrolen und Polycyclohexyl(meth)acrylaten zeigen wie Polystyrole und Polycyclohexylacrylate bzw. -methacrylate selbst eine geringe Wasseraufnahme.

3. Durch Abmischen mit Polycyclohexyl(meth)acrylat läßt sich die Doppelbrechung des Polystyrols reduzieren. Die beiden vorgenannten Eigenschaften qualifizieren die erfindungsgemäßen Polymermischungen PM speziell als Datenspeichermaterial, insbesondere fur optisch ablesbare Informationsträger. [Vgl. J. Hennig, Kunststoffe 75, pg 425 (1985)]

4) Durch Abmischen mit Polycyclohexyl(meth)acrylat kann auch der Brechungsindex des Polystyrols reduziert werden. Beispielsweise kann Polystyrol durch Abmischen mit Polycyclohexyl(meth)acrylat im Brechungsindex so verändert werden, daß der Brechungsindex der Polystyrol/Polycyclohexyl(meth)-acrylatmischung dem Brechungsindex einer eingelagerten Gummiphase angepasst wird. Auf diesem Weg kann man transparente, schlagzähe Kunststoffe erhalten.

Besonderes Interesse finden auch Polymerkompositionen, die zu ca. 40 - 99 Gew.-%, bevorzugt 70 - 95 Gew.-% aus der Polymermischung PM und zu 60 - 1 Gew.-%, bevorzugt 30 - 5 Gew.-% aus einem weiteren von A und B chemisch unterscheidbaren Polymeren P3 besteht, wobei gilt, daß Polymer P3 mit Polymer A, B und mit der Mischung PM unverträglich ist.
In der Regel wird dabei die Zusammensetzung der Polymermischung PM so gewählt, daß der Brechungsindex des Polymeren P3 mit dem Brechungsindex der Mischung PM übereinstimmt, in der Regel soll also bei Raumtemperatur gelten:

$$|n_{D}^{25}{}_{PM} - n_{D}^{25}{}_{P3}| < 0,01$$

In der Regel wird das mit PM unverträgliche Polymere P3 eine Tg < 20 Grad C aufweisen und wenigstens teilweise mit wenigstens einem der Bestandteile der Polymermischung PM, also mit A oder B, kovalent verknüpft sein. Daruber hinaus kann das Polymere P3 vernetzt sein.
Ganz besonders bevorzugt ist der Fall, daß das Polymere P3 Polybutadien oder Polyisopren ist.

Polymerkompositionen, aufgebaut aus 40 - 99 Gew.-% PM und 1 - 60 Gew.-% P3 zeichnen sich, insbesondere wenn P3 eine Tg < 20 Grad C aufweist, durch eine im Vergleich zu reinem PM verbesserte Schlagzähigkeit aus.

Insbesondere gestatten Polymerkompostitionen aus 40 - 99 Gew.-% PM und 60 - 1 Gew.-% P3 eine einfache Schlagzähabmschung von Polymeren B. So kann gegebenenfalls sprödes P2 durch Abmischen mit handelsüblichen, schlagzäh ausgerüstetem A (z.B. Styrol-Butadien-Blockcopolymere) zu einer hoch schlagzähen, klaren PM/P3-Polymerkomposition abgemischt werden.

5) Durch Umhüllung von Polystyrol mit Polycyclohexyl(meth)acrylat ist die Herstellung einer optischen Gradientenfaser möglich:
Dabei erhält man folgende Daten:

| | |
|---|---|
| Kern: | Polystyrol Brechungsindex $n_D$ = 1,59 |
| Mantel: | Polycyclohexyl(meth)acrylat $n_D$ = 1,51 In der Regel wird man als Mantel - schon wegen der hohen Sprödigkeit von Polycyclohexylmethacrylat -Cyclohexyl(meth)acrylat-haltige Copolymere (z.B. mit MMA) verwenden, wodurch der Brechungsindex des Mantels noch niedriger wird. |
| Übergang: | Kontinuierlich. Diese Zone entspricht einer Polymermischung PM. Der Kern gehorcht der Definition von A, der Mantel entspricht der Definition von B. |

Derartige Fasern können z.B. als Lichtleitkabel Verwendung finden.

6) Gegenstände aus Polystyrol mit einem dünnen Mantel aus Polycyclohexyl(meth)acrylat, insbesondere aus einem Polycyclohexyl(meth)acrylat mit (einpolymerisiertem) UV-Absorber sind zugänglich. Im Gegensatz zu nicht umhülltem Polystyrol sind solche Gegenstände witterungsstabil. Das ansonsten gravierende Problem der Wiederverwendung heterogen beschichteter Kunststoffabfälle entfällt, da Abfälle aufgrund der guten Verträglichkeit wieder eingearbeitet werden können. In der Regel werden die Gegenstände aus Polystyrol bzw. aus der Polymerverbindung PM durch Spritzen, Pressen, Extrudieren, Walzen oder Gießen hergestellt. Der Mantel aus Polymer B wird in der Regel durch Lackieren oder durch Coextrudieren aufgebracht.

7) Platten aus Polystyrol mit einem Überzug aus Polycyclohexyl(meth)acrylat lassen sich herstellen. Platten mit einem derartigen Aufbau weisen gegenüber unbehandelten Polystyrolplatten eine um ca. 2 % verbesserte Lichtdurchlässigkeit auf. In der Regel weisen Platten mit einem Überzug aus Polycyclohexyl(meth)acrylat auch eine bessere Kratzfestigkeit und eine veränderte Korrosionsbeständigkeit auf. Besonders interessant sind Mehrfachstegplatten, wie sie beispielsweise zum Verglasen von Gewächshäusern eingesetzt werden, die aus Polystyrol oder einer Polymermischung PM hergestellt worden sind und einen Überzug aus einem Cyclohexyl(meth)acrylat-haltigen Polymeren (= Polymer B) aufweisen. (DE-A 16 09 777) Weiter können Verklebungen von Polystyrolen mit dem Polymer B oder vorteilhaft mit Cyclohexylacrylat enthaltenden Monomeren/Initiator-Mischungen durchgeführt werden. Hier kann die hohe Polymerisationsgeschwindigkeit der Acrylate mit der guten Polymerverträglichkeit kombiniert werden. Derartige Objekte sind zu betrachten als erfindungsgemäß erfaßte Festkörper mit einer Polymerkonfiguration, aufgebaut aus einer Schicht aus Polymer A, einer zweiten Schicht aus Polymer B und einer Zwischenschicht aus einer verträglichen Polymermischung PM bestehend aus

A) 0,1 bis 99,9 Gew.-% eines Polystyrols, das zu 20 bis 100 Gew.-% aus Styrol und zu 80 bis 0 Gew.-% aus mit Styrol copolymerisierbaren Monomeren, und

B) 99,9 bis 0,1 Gew.-% eines Poly(meth)acrylats das zu 10 bis 100 Gew.-% aus Monomeren der Formel I und zu 90 bis 0 Gew.-% aus mit Monomeren der Formel I copolymeriserbaren Monomeren aufgebaut ist.

Ähnlich sind Objekte aus Abfallmaterial oder mit einem Gehalt an Abfallmaterial zu betrachten, etwa wenn Abfallmaterial PM in ein Polymer A eingebaut wird. Sie gehorchen der Definition, derzufolge eine verträgliche Polymermischung PM als Schicht abgedeckt wird von einer Deckschicht aus dem zweiten Polymer.

In all den vorgenannten Objekten soll die Deckschicht vorzugsweise 0,1 bis 20 Gew.-% (bezogen auf die Deckschicht) mindestens eines UV-Absorbers in zweckmäßiger Verteilung enthalten. Brauchbare UV-Absorber werden z.B. in Kirk-Othmer, Encyclopedia of Chemical Technologie, 3rd Ed. Vol. 23, pp. 615-627, J.Wiley 1983; R. Gächter u. H. Muller, Taschenbuch der Kunststoff-Additive, Carl Hanser Verlag 1979, S. 90 bis 143; Ullmann's Encyclopädie der Techn. Chemie, 4. Auflage, Band 15, S. 256 - 260, Verlag Chemie 1978, US-A 4 576 170, angegeben.

8) Verarbeitungstechnische Vorteile resultieren bei der Anwendung von Mischungen PM aus ≧ 90 Gew.-% Polystyrol und ≦ 10 Gew.-% Polycyclohexyl(meth)acrylat. In diesem Falle übernimmt das Poly(meth)-acrylat die Funktion eines Verarbeitungshilfsmittels.

9) Aus Polystyrol/Polycyclohexyl(meth)acrylatmischungen lassen sich transparente Formkörper gewinnen, die an der Oberfläche durch Energieeinwirkung, z.B. geeignete Strahlung so modifiziert worden sind, daß das Poly(meth)acrylat abgebaut worden ist, das Polystyrol jedoch nicht. (Formkörper mit reflexmindernder Oberfläche, Resists)

Die folgenden Beispiele dienen zur Erläuterung der Erfindung.

Die Bestimmung der VICAT-Erweichungstemperatur erfolgt nach DIN 53460.
Die Bestimmung der reduz. Viskosität ($\eta spec/_c$) in Anlehnung an DN 1342, DIN 51562 und DIN 7745. Die Bestimmung der Lichtdurchlässigkeit kann- sofern nicht anders vermerkt- nach DN 5036 vorgenommen werden. Die Trübung (haze) wird in % (ASTM D 1003) angegeben.

BEISPIELE

Beispiel 1

Verträgliche Polymermischungen PM aus Polystyrol = Polymer A und Polycyclohexylmethacrylat = Polymer B. Herstellen von verträglichen Polymerfilmen aus organischer Lösung.

Polystyrol ($\eta_{spec/c}$ = 115 ml/g) wird in Toluol zu 20 Gew.-% gelöst.
Ebenso wird aus Polycyclohexylmethacrylat ($\eta_{spec/c}$ = 29 ml/g) eine 20 %ige Lösung in Toluol hergestellt. Die Lösungen werden in den in Tabelle 1 angegebenen Mischungsverhältnissen gemischt. Es werden aus diesen Mischungen Filme ausgegossen, im Vakuum getrocknet und anschließend visuell beurteilt.
Alle Abmischungen ergeben klare, farblose Filme. (Siehe auch Tabelle 1)

Tabelle 1

| Visuelle Beobachtung von Polystyrol/Polycyclohexylmethacrylat-Abmischungen | | | |
|---|---|---|---|
| Versuch Nr. | Gew.-% Polystyrol im Film | Gew.-% Polycyclohexylmethacrylat | Optische Beurteilung des getrockneten Films |
| 1a | 98 | 2 | + |
| 1b | 95 | 5 | + |
| 1c | 90 | 10 | + |
| 1d | 80 | 20 | + |
| 1e | 70 | 30 | + |
| 1f | 60 | 40 | + |
| 1g | 50 | 50 | + |
| 1h | 40 | 60 | + |
| 1i | 30 | 70 | + |
| 1j | 20 | 80 | + |
| 1k | 10 | 90 | + |
| 1l | 5 | 95 | + |
| 1m | 2 | 98 | + |
| (+ = homogen, glasklar) | | | |

Beispiel 2

Verträgliche Polymermischungen PM aus Polystyrol (=Polymer A) und Polycyclohexylacrylat (=Polymer B)

Polystyrol ($\eta_{spec/c}$ = 115 mg/g) wird mit Polycyclohexylacrylat ($\eta_{spec/c}$ = 23 ml/g) gemäß Beispiel 1 und gemischt. Ergebnis: alle Mischungen PM von 98/2 bis 2/98 sind völlig verträglich.

Beispiel 3

Überprüfung der Verträglichkeit bei erhöhter Temperatur.

Ausgewählte Proben der in den Beispielen 1 - 2 enthaltenen verträglichen Polymermischungen (20/80, 50/50, 80/20) werden auf einer Heizbank erwärmt. Ergebnis: Die Polymermischungen sind bis T > 250 Grad C verträglich. Eine Entmischung wird im Temperaturbereich bis 250 Grad C nicht beobachtet.

Beispiele 4 - 13 (Vergleichsbeispiele).

Unverträgliche Polymermischungen aus Polystyrol (Polymer A) und Polyalkyl(meth)acrylaten (Polymer B)

Die verschiedenen Poly(meth)acrylate werden wie in Beispiel 1 beschrieben in Toluol gelöst und mit einer 20 %igen Lösung von Polystyrol ($\eta_{spec/c}$ = 115 ml/g) in Toluol im Verhältnis 20/80, 50/50, 80/20 gemischt. Die erhaltenen Polymerfilme werden visuell beurteilt.
Wie aus Tabelle 2 zu ersehen ist, sind alle untersuchten Polyalkyl(meth)acrylate mit Ausnahme von Polycyclohexylmethacrylat und Polycyclohexylacrylat mit Polystyrol unverträglich.
Diese Vergleichsbeispiele belegen die uberraschende, außerordentlich gute Verträglichkeit von Polycyclohexylmethacrylat und Polycyclohexylacrylat mit Polystyrol, die sich auch beim Abmischen auf dem Extruder zeigt. (Vergleiche Beispiel 25).

Anmerkung: Synthese der Polymeren B für die Beispiele 1 - 25:

Die Monomeren werden unter Zusatz von 0,15 % AIBN = Azoisobuttersäurenitril und 0,33 % Dodecylmercaptan bei 60 Grad C bis zu einem geringen Umsatz (ca. 20 Gew.-%) in sauerstoffreier Atmosphäre polymerisiert. Danach werden die Polymeren in Methanol gefällt, anschließend in Methylenchlorid gelöst und nochmal in Methanol gefällt. Anschließend wurde im Vakuumtrockner getrocknet.

Tabelle 2

| Untersuchung der Verträglichkeit Von Polystyrol ( = Polymer A ) mit Polyalkyl(meth)acrylaten ( = Polymer B ) | | | | |
|---|---|---|---|---|
| Beispiel No. | Polymer B | Mischungsverhältnis Polymer A / Polymer B [g/g] | | |
| | | 80/20 | 50/50 | 20/80 |
| 4 | PMMA | - | - | - |
| 5 | PEMA | - | - | - |
| 6 | PiPMA | - | - | - |
| 7 | PBMA | - | - | - |
| 8 | PiBMA | - | - | - |
| 9 | PtBMA | - | - | - |
| 10 | PNPMA | - | - | - |
| 1 | PCHM | + | + | + |
| 2 | PCHA | + | + | + |
| 11 | PTMCHMA | - | - | - |
| 12 | PTMCHA | - | - | - |
| 13 | PiBorMA | - | - | - |

- : unverträglich: trüber, entmischter Polermerfilm

+ : verträglich: klar, homogen

PMMA: Polymethylmethacrylat, PEMA: Polyethylmethacrylat, PiPMA: Polyisopropylmethacrylat, PBMA: Poly-n-butylmethacrylat, PiBM: Poly-i-butylmethacrylat, PtBMD: Poly-t-Butylmethacrylat, PNPMD: Poly-neopentylmethacrylat, PCHMA: Polycyclohexylmethacrylat, PCHA: Polycyclohexylacrylat, PTMCHMA, Poly-3,3,5-Trimethylcyclohexylmethacrylat, PTMCHA: Poly-3,3,5-Trimethylcyclohexylacrylat, PiBorMA: Poly-isobornylmethacrylat.

Beispiel 14

Herstellung von Formkörpern aus einer Mischung Polystyrol/Polycyclohexylmethacrylat

20 Teile Polycyclohexylmethacrylat ($\eta_{spec/c}$ = 29 ml/g) werden mit 80 Teilen Polystyrol ($\eta spec/_c$ = 115 ml/g) auf einem Extruder gemischt. Man erhält ein glasklares Granulat, aus dem Spritzlinge (Abmessungen: 50 mm × 30 mm × 3 mm) hergestellt werden.
Die Spritzlinge zeigen eine Lichtdurchlässigkeit L von 93,5, gemessen mit Hunter-Lab. Farbmeßgerät.
Der Haze beträgt 6,0 % .
Die Vicat-Erweichungstemperatur beträgt: 101 Grad C.

Beispiel 15

Herstellung von Formkörpern aus einer Mischung Polystyrol/Polycyclohexylmethacrylat.

Man verfährt wie in Beispiel 14, wählt jedoch ein anderes Mischungsverhältnis: 50 Teile Polystyrol ($\eta spec/_c$ = 115 ml/g), 50 Teile Polycyclohexylmethacrylat. Man erhält glasklare Spritzlinge:
Lichtdurchlässigkeit L: 94,82
Haze: 4,4 %
Vicat-Erweichungstemperatur: 101 Grad C.

Beispiel 16

Herstellung von Formkörpern aus einer Mischung Polystyrol/Copolymer aus Cyclohexylmethacrylat/Methylmethacrylat = 55/45)

Man verfährt wie in Beispiel 15, wählt jedoch zur Abmischung ein anderes Polymer B (Polymer B = Copolymeres aus 55 Gew.-% Cyclohexylmethacrylat und 45 Gew.-% Methylmethacrylat).
Man erhält einen glasklaren Spritzling.

Beispiel 17

Beschichtung einer Polystyrolplatte mit einem Polymeren B

Eine Monomerenmischung bestehend aus Methylmethacrylat, Cyclohexylmethacrylat, Methylacrylat wird bis zu einem Umsatz von weniger als 40 % polymerisiert und das entstehende Polymere isoliert.
Charakterisierung des Polymeren:

| | |
|---|---|
| Zusammensetzung: | 57 % Methylmethacrylat, |
| | 33 % Cyclohexylmethacrylat, |
| | 10 % Methylacrylat. |
| Molekulargewicht: | ca. 100 000. |

Von diesem Methylmethacrylat-Cyclohexylmethacrylat-Methylacrylat-Copolymeren wird eine 15 %ige Lösung in Diacetonalkohol/1-Methoxy-2-propanol = 1/1 hergestellt, der 0,1 Gew.-% 2-Hydroxy-4n-octoxybenzophenon als UV-Absorber zugesetzt sind. Mit diesem Lack wird eine 3 mm dicke Polystyrolplatte (Abmessungen: 20 cm × 20 cm) tauchbeschichtet (40 cm/min) und anschließend 2 h bei 90 Grad C getrocknet.
Es resultiert eine klare Platte, die gegenüber der Ausgangsplatte eine ca. 2 % höhere Lichtdurchlässigkeit aufweist. Ebenso zeigt die beschichtete Platte deutlich verbesserte Wischfestigkeit.

Beispiel 18

Wiedereinarbeitung in Abfälle

Standardpolystyrol wird zu 20 Gew.-% mit gemahlenen Plattenabfällen der beschichteten Plattenabschnitte gemäß Beispiel 17 gemischt. Diese Mischung wird zu 3 mm dicken, klaren Platten extrudiert. Diese Platten werden wie in Beispiel 17 beschrieben mit einer 15 %igen Lösung des UV-Absorber-haltigen Lackes

(Polymer B) beschichtet. Die Eigenschaften der so erhaltenen Platten entsprechen denen der gemäß Beispiel 17 enthaltenen Platten.

Beispiel 19

Synthese einer Polymermischung PM mit Trübungspunkt.

200 g des in Beispiel 17 beschriebenen Polymer B

| | |
|---|---|
| (Zusammensetzung: | 57 % Methylmethacrylat |
| | 33 % Cyclohexylmethacrylat |
| | 10 % Methylacrylat |
| Molekulargewicht: | ca. 100 000) |

werden in einer Mischung aus
800 g Styrol
0,5 g Azoisobutyronitril
0,5 g 1,1′-Azobis(cyclohexan-1-nitril)
5 g t-Dodecylmercaptan gelöst und zu einer 3 mm dicken Platte polymerisiert. (96 h bei 50 Grad C und anschließend 10 h bei 90 Grad C).

Es resultiert eine glasklare Platte, die beim Erwärmen bis wenigstens 150 Grad C klar bleibt.
Kurzes Erwärmen auf Temperaturen > 200 Grad C führt zu einer Eintrübung, die durch Abschrecken eingefroren werden kann .
Damit liegt mit dieser Polymermischung PM ein System zur optischen Datenspeicherung vor, das im Sinne der DE-A 34 36 476.5 eingesetzt werden kann.

Beispiel 20

Synthese einer Polymermischung PM mit niedriger Glastemperatur.

Eine Losung von 10 Gew.-% Polystyrol ($\eta_{spec/c}$ = 22 ml/g) in 90 Gew.-% einer Mischung aus 20 Teilen Butylacrylat und 80 Teilen Cyclohexylacrylat und 0,1 Teil Trimethylolpropantriacrylat wird unter Zuhilfenahme von Bis-(4-t-butylcyclohexyl)-peroxidicarbonat polymerisiert. Es resultiert ein glasklarer Gummi.

Beispiel 21

Synthese einer Polymermischung PM mit niedriger Glastemperatur und Trübungspunkt,

Man verfährt wie in Beispiel 20, wählt jedoch eine andere Monomerenzusammensetzung:
30 Teile Butylacrylat
70 Teile Cyclohexylacrylat
0,1 Teil Trimethylolpropantriacrylat.

Es resultiert ein glasklarer Gummi, der beim Erwärmen trüb wird.

Beispiel 22

Synthese einer Polymermischung PM mit hohem Methylmethacrylatanteil

Ein Copolymeres der Zusammensetzung 60 % Methylmethacrylat und 40 % Styrol, ($\eta_{spec/c}$ = 19 ml/g) (= Polymer A) wird zu 20 Gew.-% in Toluol gelöst.

Ebenso wird ein Copolymeres der Zusammensetzung 60 % Methylmethacrylat und 40 Cyclohexylmethacrylat ($\eta_{spec/c}$ = 18 ml/g) (= Polymer B) zu 20 Gew.-% in Toluol gelöst. Die Lösungen werden im Verhältnis 19 : 1, 3 : 1, 1 : 1, 1 : 3, 1 : 19 gemischt. Es werden Filme daraus hergestellt.
Die Filme sind ohne Ausnahme farblos, klar. Beim Erwärmen tritt bis 260 Grad C keine Entmischung ein.

Beispiel 23

Phasendiagramm einer Polymermschung PM aus Polystyrol (Polymer A) und einem Copolymeren 80 Gew.-% MMA und 20 Gew.-% Cyclohexylmethacrylat (Polymer B) PMMA ist mit Polystyrol unverträglich.

Polycyclohexylmethacrylat ist mit Polystyrol sehr gut verträglich. Durch Copolymerisation von Methylmethacrylat mit Cyclohexylmethacrylat kann ein Polymersystem mit LCST (Lower Critical Solution Temperature) erzeugt werden. Es resultiert also ein Polymersystem, das bei niedrigen Temperaturen verträglich ist, bei hohen Temperaturen dagegen unverträglich. (Vgl. Stand der Technik, oben)

Polystyrol ($\eta_{spec/c}$ = 19 ml/g) wird mit einem Copolymeren aus 80 Gew.-% MMA und 20 Gew.-% Cyclohexylmethacrylat ($\eta_{spec/c}$ = 18 ml/g) wie in Beispiel 1 beschrieben gemischt. Es resultieren klare Filme. Diese Filme zeigen beim Erwärmen einen Trübungspunkt (Entmischung). In Tabelle 3 sind Zusammensetzung der Polymermischung und beobachtete Trübungspunkte aufgelistet.

Tabelle 3

Trübungspunkte von Polystyrol/Methylmethacrylat-Cyclohexylmethacrylat = 80-20-Copolymeren.

| Beispiel Nr. | Zusammensetzung der Polymermischung PM (Gew.-%) | | Trübungspunkt (Grad C) |
|---|---|---|---|
| | Polystyrol | Copolymer aus MMA und Cyclohexylmeth-acrylat | |
| 24 a | 95 | 5 | 113 |
| b | 75 | 25 | 89 |
| c | 50 | 50 | 105 |
| d | 25 | 75 | 117 |
| e | 5 | 95 | 151 |

Die Lage der Trübungspunkte ( = Entmischungspunkte) kann durch kleine Änderung der Copolymerzusammensetzung beliebig verschoben werden.

Diese Polymermischungen sind als Datenspeicherplatten gemäß DE-A 34 36 476 geeignet.

Beispiel 25

Abmischung von 2 Formmassen mit geringer Wasseraufnahme

Polymer P1 Copolymeres aus 60 % Methylmethacrylat und 40 % Styrol ($\eta$spec/c: 50 ml/g)

Polymer B Copolymeres der Zusammensetzung :

57 Gew.-% Methylmethacrylat

33 Gew.-% Cyclohexylmethacrylat

10 Gew.-% Methylacrylat

Polymer A und Polymer B werden auf dem Extruder im Verhältnis 25/75; 50/50; 75/25 gemischt.

Bei allen drei Abmischungen resultieren glasklare Extrudate .

Diese Polymermischungen PM sind insbesondere als Datenspeicherplatten für optisch ablesbare Information geeignet.

Folgerungen

Die Beispiele belegen die außerordentlich gute Verträglichkeit des Polycyclohexyl(meth)acrylats mit Polystyrol, die es ermöglicht, nicht nur das spröde und somit wirtschaftlich unbedeutende Polycylohexyl-(meth)acrylat selbst, sondern auch andere Polymere, insbesondere Poly(meth)acrylate durch eine vergleichsweise geringere Modifikation mit Cyclohexyl(meth)acrylat mit Polystyrol verträglich zu machen.

Schon aus Kostengründen wird man den Cyclohexyl(meth)Brylatgehalt des Polymeren B möglichst gering halten. Dies ergibt sich schon dadurch, daß eines der interessantesten erfindungsgemäßen Anwendungsgebiete, nämlich der Oberflächenschutz von Polystyrol beispielsweise durch Lackieren mit Polymer B sein wird.

Gerade hier sind minimale Polymermengen B, beispielsweise 0,5 Gew.-% bezogen auf Polymer P1 ausreichend, so daß bei der Wiedereinarbeitung nur sehr geringe Mengen von Polymer P2 in Polymer A eingearbeitet werden müssen.

Wie in Beispiel 23 gezeigt wird, ist jedoch gerade bei sehr unsymmetrischen Abmischungsverhältnissen (z.B. 1 Gew.-% B in 99 Gew.-% A) die Anforderung an die Verträglichkeit und somit auch der erforderliche

Gehalt an Cyclohexyl(meth)acrylat im Polymer B gering, beispielsweise < 20 Gew.-%.
Während demnach einerseits der Gehalt an Cyclohexyl(meth)acrylat im Polymer B möglichst gering gehalten wird, ist andererseits ein Polymer A mit einem möglichst hohen Gehalt an Polystyrol, z.B. reines Polystyrol bzw. schlagzäh-modifiziertes Polystyrol (Vgl. Vieweg Daumiller, Kunststoff-Handbuch Band V, Polystyrol, Carl Hanser, München 1969) bevorzugt.

Beispiel 26

Datenspeicher auf Basis der erfindungsgemäßen Polymermischung

Materialien:

Substrat: 3 mm dicke extrudierte Polymethylmethacrylat (PMMA)-Platte (Plexiglas XT® der Fa. Röhm GmbH)

Polymere:

Polymer 26a:

| | |
|---|---|
| Copolymeres aus | 78 % Methylmethacrylat |
| | 20 % Cyclohexylmethacrylat |
| | 2 % Cyclohexylacrylat |
| Reduzierte spez. Viskosität: | $\eta sp/c$ = 48,4 ml/g |
| Brechungsindex: | $n_D^{20}$ = 1,49 |

Polymer 26b:
Polystyrol
Reduzierte spez. Viskosität: $\eta sp/c$ = 23,4 ml/g
Brechungsindex $n_D^{20}$ = 1,59
Aufbau:
Die PMMA-Platte wird mit einer 15 %-igen Lösung von Polymer 26a in einer Mischung aus Toluol/o-Xylol = 1/1 tauchbeschichtet, bei 80 Grad C getrocknet und ein 2. Mal mit dieser 15 %-igen Lösung von Polymer 26a in der Toluol/o-Xylol = 1/1-Mischung, beschichtet. Anschließend wird eine Mischung aus:
30 Teilen Polymer 26a
70 Teilen Polymer 26b
2 Teilen eines Farbstoffes Makrolexrot GN (Colour Index)
in Toluol/o-Xylol aufgetragen.

Nach dem Trocknen dieser rot eingefärbten Polymermischung wird noch einmal die oben genannte Lösung von Polymeren P26a allein aufgetragen.

Es resultieren glasklare, intensiv rot gefärbte Platten. Durch lokales Erwärmen auf 130 Grad C kann Information eingeschrieben werden.

Abb. 1 zeigt einen Ausschnitt aus dieser beschichteten Platte. Wie auf dieser Elektronenmikroskopieaufnahme gut zu erkennen ist, liegt die Polymermischung völlig homogen vor.

Abb. 2 zeigt einen Ausschnitt aus einem auf 130 Grad C erwärmten Bereich dieser Platte.
Wie zu erkennen ist, liegen hier die beiden Polymeren entmischt ( = unverträglich) nebeneinander vor.

Beispiel 27

Witterungsschutz von Polymer A durch eine Beschichtung mit lichtschutzmittelhaltigem Polymer B.

Auf eine 3 mm dicke, extrudierte Platte aus Polymer P1 (Polystyrol 158 K® der BASF) wird eine 20 %-ige Lösung des Polymeren B lackiert.

Polymer B: Copolymeres aus
49 Gew.-% Methylmethacrylat
49 Gew.-% Cyclohexylmethacrylat
2 Gew.-% Cyclohexylacrylat
$\eta spec/c$ = 36
Lösungsmittel: Mischung aus:
40 % 2-Propanol
40 % Diacetonalkohol

20 % Methylethylketon
Lichtschutzmittel: 10 Gew.-% bezogen auf Polymer B
Probe C: Lichtschutzmittel:
2-Hydroxy-4-methoxybenzophenon
Schichtdicke: ca. 10µm
Probe D: Schichtdicke: ca. 20 µm
Probe H: Lichtschutzmittel:
2(2′-Hydroxy-5′-t-octylphenyl)-benzotriazol
Schichtdicke: ca. 10 µm.
Die Haftung der Schicht ist in allen Fällen sehr gut (kein Abriß im Tesafilmtest).
Probe L: unbeschichtete Vergleichsprobe.

Die beschichteten Polystyrolplatten sowie die unbeschichtete Referenzplatte wurde der Schnellbewitterung unterzogen.
Bedingung: Xenotest, Grenzwellenlänge: 300 mm (nach DIN 53 387) Zeit: 1 000 Stunden.
Während die ungeschützte Polystyrollplatte nach dieser Zeit an der bewitterten Oberfläche völlig zerstört ist (Probe L), sind die mit UV-Schutzmittel enthaltendem Polymer B beschichteten Proben auch nach 1000 h Xenotest völlig unverändert.

Beispiel 28

Partiell verträgliche Polymermischung mit niedriger Glastemperatur.

Synthese des Polymeren P28a

900 g Toluol, 240 g Butylacrylat, 60 g Cyclohexylacrylat und 9 g Dodecylmercaptan werden auf 60 Grad C unter Argon in einem Kolben erwärmt.
Dazu gibt man eine Lösung von 3 g t-Butylperneodecanoat in 17 g Toluol in 4 Portionen (in einem Abstand von ca. 20 Minuten). Nach 4 Stunden Gesamtreaktionszeit wird das Polymere in Methanol gefällt und getrocknet.

Synthese des Polymeren P28b

Eine Mischung aus
20,0 g Butylacrylat
80,0 g Styrol
0,6 g t-Dodecylmercaptan
0,2 g AIBN
0,1 g 1,1′-Azobis(cyclohexan-1-nitril)
wird 24 Stunden bei 50 Grad C polymerisiert. Danach wird in Methanol gefällt und getrocknet.

Polymere P28a und P28b werden in Toluol gelöst, in unterschiedlichen Anteilen gemischt. Aus diesen Mischungen werden Filme gegossen, die alle glasklar sind. Beim Erwärmen uber eine bestimmte Temperatur (z.B. ca. 110 Grad C bei einer 1/1-Mischung) erfolgt Trübung, die beim Abkuhlen unter dieser Entmischungstemperatur wieder verschwindet.
(Siehe auch Abb. 3: Phasendiagramm der Mischung PM28.)

**Patentansprüche**

**1.** Verträgliche Polymermischungen aus zwei unter sich verschiedenen Polymerkomponenten,

dadurch gekennzeichnet,

daß die Polymermischung PM besteht aus

A) 0,1 bis 99,9 Gew.-% eines Polymeren A, das zu wenigstens 20 und bis zu 100 Gew.-% aus Styrol und
B) 99,9 bis 0,1 Gew.-% eines Polymeren B, das zu mindestens 10 und bis zu 100 Gew.-% aus den Monomeren der Formel I

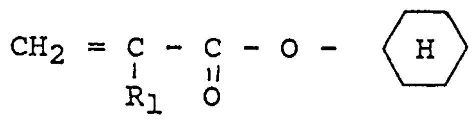 I

worin $R_1$ für Wasserstoff oder Methyl steht, aufgebaut ist mit der Maßgabe, daß das Polymer A allenfalls einen α-Methylstyrolgehalt unter 20 Gew.-% besitzt, und der Anteil der sehr polaren Monomeren gebildet aus der Gruppe bestehend aus (Meth)Acrylnitril, Maleinsäureanhydrid Maleinsäureimiden, p-(2-Hydroxylhexafluoroisopropyl)styrol und Allylalkohol unter 10 Gew.-% liegt.

**2.** Verträgliche Polymermischungen PM aus zwei Polymerkomponenten gemäß Anspruch 1, dadurch gekennzeichnet, daß die Polymerkomponente A zu wenigstens 50 Gew.-% aus Styrol aufgebaut ist.

**3.** Verträgliche Polymermischung PM aus zwei Polymerkomponenten gemäß den Ansprüchen 1 und 2, dadurch gekennzeichnet, daß die Polymerkomponente A zu wenigstens 90 Gew.-% aus Styrol aufgebaut ist.

**4.** Verträgliche Polymermischungen PM aus zwei Polymerkomponenten gemäß den Ansprüchen 1 - 3, dadurch gekennzeichnet, daß die Polymerkomponente A zu wenigstens 99 Gew.-% aus Styrol aufgebaut ist.

**5.** Verträgliche Polymermischungen PM aus zwei Polymerkomponenten gemäß den Ansprüchen 1 - 4, dadurch gekennzeichnet, daß die Polymerkomponente B zu 20 - 90 Gew.-% aus Monomeren der Formel I aufgebaut ist.

**6.** Verträgliche Polymermischungen PM aus zwei Polymerkomponenten gemäß den Ansprüchen 1 - 5, dadurch gekennzeichnet, daß die Polymerkomponente B zu 30 - 80 Gew.-% aus den Monomeren der Formel I aufgebaut ist.

**7.** Verträgliche Polymermischungen PM gemäß den Ansprüchen 1 - 4, dadurch gekennzeichnet, daß die Polymerkomponente B zu
20 - 90 Gew.-% aus den Monomeren der Formel I und zu 80 - 10 Gew.-% aus Acryl- und/oder Methacrylsäureestern von nicht-alicyclischen Alkoholen mit 1 - 12 Kohlenstoffatomen und/oder aus Acryl-und/oder Methacrylsäureestern mit gegebenenfalls substituierten cyclischen Alkanolen mit 4,5 oder 7 - 12 Kohlenstoffatomen im Ring und/oder substituierten Cyclohexanolen mit 7 - 12 Kohlenstoffatomenaufgebaut ist.

**8.** Verträgliche Polymermischung PM aus zwei Polymerkomponenten gemäß den Ansprüchen 1 - 4, dadurch gekennzeichnet, daß die Polymerkomponente B zu 80 - 10 Gew.-% Methylmethacrylat und 20 - 90 Gew.-% aus den Monomeren der Formel I aufgebaut ist.

**9.** Verträgliche Polymermischung PM gemäß Anspruch 1, dadurch gekennzeichnet, daß die Polymerkomponente A zu 1 - <20 Gew.-% aus α-Methylstyrol und/oder p-Methylstyrol aufgebaut ist.

**10.** Verträgliche Polymermischung PM gemäß Anspruch 1, dadurch gekennzeichnet, daß die Polymerkomponente A zu 1 - <20 Gew.-% aus einem Monomeren der Formel II

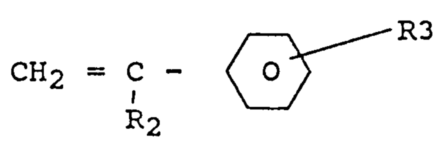

worin $R_2$ für Wasserstoff oder Methyl und $R_3$ für einen Alkylrest $C_nH_{2n+1}$ mit $n = 1 - 8$ steht, aufgebaut ist.

**11.** Verträgliche Polymermischung PM gemäß den Ansprüchen 1 - 10, dadurch gekennzeichnet, daß der

Gehalt an polaren Monomeren ausgewählt aus der Gruppe (Meth)acrylnitril, Maleinsäureanhydrid, Maleinsäureimide p-(2-Hydroxyhexafluoroisopropyl)styrol und Allylalkohol an der Polymerkomponente A < 5 Gew.-% ausmacht.

**12.** Verträgliche Polymermischung PM gemäß den Ansprüchen 1 - 11, dadurch gekennzeichnet, daß die Mischung aus 10 - 99 Gew.-% Polymer A und 90 - 1 Gew.-% Polymer B aufgebaut ist.

**13.** Verträgliche Polymermischung PM gemäß den Ansprüchen 1 - 12, dadurch gekennzeichnet, daß die Mischung aus 50 - 90 Gew.-% Polymer A und 50 - 10 Gew.-% Polymer B aufgebaut ist.

**14.** Verträgliche Polymermischung PM gemäß den Ansprüchen 1 - 12, dadurch gekennzeichnet, daß die Mischung aus 20 - 80 Gew.-% Polymer A und 80 - 20 Gew.-% Polymer B aufgebaut ist.

**15.** Verträgliche Polymermischung PM gemäß den Ansprüchen 1 - 14, dadurch gekennzeichnet, daß wenigstens eines der Polymeren A und B eine Glastemperatur Tg > 70 Grad C aufweist.

**16.** Verträgliche Polymermischung PM gemäß den Ansprüchen 1 - 14, dadurch gekennzeichnet, daß die Polymermischung PM eine Glastemperatur Tg > 70 Grad C aufweist.

**17.** Verträgliche Polymermischung PM gemäß den Ansprüchen 1 - 14, dadurch gekennzeichnet, daß die Polymerkomponente B eine Glastemperatur Tg < 40 Grad C aufweist.

**18.** Verträgliche Polymermischung PM gemäß Anspruch 17, dadurch gekennzeichnet, daß die Polymerkomponente B eine Glastemperatur < 20 Grad C aufweist.

**19.** Verträgliche Polymermischung PM gemäß den Ansprüchen 1 - 18, dadurch gekennzeichnet, daß die Polymermischung PM beim Erwärmen einen Trübungspunkt zeigt.

**20.** Verträgliche Polymermischung PM gemäß den Ansprüchen 1 - 19, dadurch gekennzeichnet, daß die Polymermischung einen Trübungspunkt > 25 Grad C aufweist.

**21.** Verträgliche Polymermischung PM gemäß Anspruch 20, dadurch gekennzeichnet, daß die Polymermischung einen Trübungspunkt > 60 Grad C aufweist.

**22.** Verträgliche Polymermischung PM gemäß Anspruch 21, dadurch gekennzeichnet, daß die Polymermischung einen Trübungspunkt > 180 Grad C aufwest.

**23.** Verträgliche Polymermischung PM gemäß den Ansprüchen 1 - 22, dadurch gekennzeichnet, daß das Molekulargewicht MW des Polymeren A und des Polymeren B > 3 000 beträgt.

**24.** Verträgliche Polymermischung PM gemäß den Ansprüchen 1 - 22, dadurch gekennzeichnet, daß wenigstens eines der beiden Polymere A und B ein Molekulargewicht MW > 5 000 aufweist.

**25.** Verträgliche Polymermischung PM gemäß den Ansprüchen 1 - 22, dadurch gekennzeichnet, daß wenigstens eines der beiden Polymeren ein Molekulargewicht MW im Bereich 5 000 - 1000 000 aufweist.

**26.** Verträgliche Polymermischung PM gemäß den Ansprüchen 1 - 22, dadurch gekennzeichnet, daß sowohl Polymer A als auch Polymer B ein Molekulargewicht MW im Bereich 20 000 - 500 000 aufweisen.

**27.** Verträgliche Polymermischung PM gemäß den Anspüchen 1 - 26, dadurch gekennzeichnet, daß die Lichtdurchlässigkeit (gemessen an einer 3 mm dicken Probe) > 88 % beträgt.

**28.** Verträgliche Polymermischung PM gemäß den Ansprüchen 1 - 27, dadurch gekennzeichnet, daß der Haze < 10 % beträgt.

**29.** Polymerkomposition aus 40 - 99 Gew.-% der Polymermischung PM gemäß den Ansprüchen 1 - 28 und

60 - 1 Gew.-% eines weiteren von A und B chemisch unterscheidbaren Polymeren P3, das mit A, B und PM unverträglich ist

**30.** Polymerkompostistion gemäß Anspruch 29, dadurch gekennzeichnet, daß der Brechungsindex der Polymermischung PM ($n_{DPM}$) bei Raumtemperatur mit dem Brechungsindex des Polymeren P3 ($\eta_{DP3}$) übereinstimmt, so daß gilt: $n_D^{25}{}_{PM} - n_D^{25}{}_{P3} < 0{,}01$.

**31.** Polymerkomposition gemäß den Anspruchen 29 und 30, dadurch gekennzeichnet, daß die Glastemperatur Tg der Polymeren P3 < 20 Grad C liegt.

**32.** Polymerkomposition gemäß den Ansprüchen 29 - 31, dadurch gekennzeichnet, daß das Polymere P3 wenigstens teilweise mit den Polymeren A und/oder B kovalent verknüpft ist.

**33.** Polymerkompositionen gemäß den Ansprüchen 29 - 32, dadurch gekennzeichnet, daß das Polymere P3 vernetzt ist.

**34.** Polymerkompositionen gemäß den Ansprüchen 29 - 33, dadurch gekennzeichnet, daß das Polymere P3 Polybutadien oder Polyisopren ist.

**35.** Gegenstände aus den verträglichen Polymermischungen gemäß den Ansprüchen 1 - 34.

**36.** Gegenstände aus der verträglichen Polymermischung PM gemäß den Ansprüchen 1 - 35 mit einem Überzug aus Polymer B.

**37.** Witterungsbeständige Gegenstände gemäß Anspruch 36, dadurch gekennzeichnet, daß das Polymer P2 einen gegebenenfalls einpolymerisierten UV-Absorber in Anteilen von 0,1 - 20 Gew.-% (bezogen auf das Polymer B) enthält.

**38.** Spritzgegossene Formkörper gemäß den Ansprüchen 35 - 37.

**39.** Extrudierte Formkörper gemäß den Ansprüchen 35 - 37.

**40.** Datenspeicherplatte, insbesondere für optisch ablesbare Information, gemäß den Ansprüchen 35 - 39.

**41.** Optische Gradientenfaser mit einem Kern aus Polymer A und einer Hülle aus Polymer B und einer Zwischenschicht aus einer verträglichen Polymermischung gemäß Anspruch 1.

**42.** Thermotrope Schutzverglasung enthaltend eine Polymermischung PM gemäß den Ansprüchen 19 - 22.

**43.** Lösungen von Polymermischungen PM gemäß Anspruch 1.

**44.** Polymerfilm aus Lösungen gemäß Anspruch 43.

**Claims**

**1.** Compatible polymer mixtures consisting of two different polymer components, characterised in that the polymer mixture PM consist of

A) 0.1 to 99.9% by weight of a polymer A which is made up of at least 20 and up to 100 wt.-% of styrene and
B) 99.9 to 0.1 wt.-% of a polymer B which is made up of at least 10 and up to 100 wt.-% of the monomers of formula I

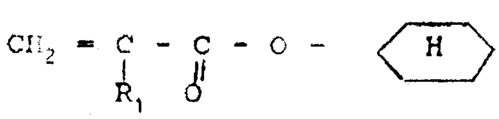 I

wherein $R_1$ represents hydrogen or methyl,
with the proviso that the polymer A will in every case have an α-methyl styrene content of less than 20 wt.-%, and the proportion of the highly polar monomers formed from the group consisting of (meth)-acrylonitrile, maleic acid anhydride, maleic acid imides, p-(2-hydroxylhexafluoroisopropyl)styrene and allylalcohol is less than 10 wt.-%.

**2.** Compatible polymer mixtures PM consisting of two polymer components according to claim 1, characterised in that polymer component A is made up of at least 50 wt.-% of styrene.

**3.** Compatible polymer mixtures PM consisting of two polymer components according to claims 1 and 2, characterised in that polymer component A is made up of at least 90 wt.-% of styrene.

**4.** Compatible polymer mixtures PM consisting of two polymer components according to claims 1 to 3, characterised in that polymer component A is made up of at least 99% by weight of styrene.

**5.** Compatible polymer mixtures PM consisting of two polymer components according to claims 1 to 4, characterised in that polymer component B is made up of 20-90 wt.-% of monomers of formula I.

**6.** Compatible polymer mixtures PM consisting of two polymer components according to claims 1 to 5, characterised in that polymer component B is made up of 30-80 wt.-% of the monomers of formula I.

**7.** Compatible polymer mixtures PM according to claims 1 to 4, characterised in that the polymer component B consists of

20-90 wt.-% of the monomers of formula I and 80-10 wt.-% of acrylic and/or methacrylic acid esters of non-alicyclic alcohols having 1-12 carbon atoms and/or of acrylic and/or methacrylic acid esters with optionally substituted cyclic alkanols having 4, 5 or 7-12 carbon atoms in the ring and/or substituted cyclohexanols having 7-12 carbon atoms.

**8.** Compatible polymer mixture PM consisting of two polymer components according to claims 1 to 4, characterised in that polymer component B is made up of 80-10 wt.-% of methylmethacrylate and 20-90 wt.-% of the monomers of formula I.

**9.** Compatible polymer mixture PM according to claim 1, characterised in that polymer component A is made up of 1-<20 wt.-% of α-methylstyrene and/or p-methylstyrene.

**10.** Compatible polymer mixture PM according to claim 1, characterised in that the polymer component A is made up of 1-<20 wt.-% of a monomer of formula II

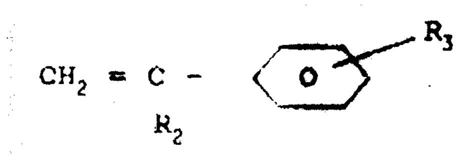

wherein $R_2$ represents hydrogen or methyl and $R_3$ represents an alkyl group $C_nH_{2n+1}$ where n = 1-8.

**11.** Compatible polymer mixture PM according to claims 1 to 10, characterised in that the content of polar monomers selected from the group comprising (meth)acrylonitrile, maleic anhydride, maleic acid imide, p-(2-hydroxyhexafluoroisopropyl)styrene and allyl alcohol in the polymer component A makes up less than 5 wt.-%.

**12.** Compatible polymer mixture PM according to claims 1 to 11, characterised in that the mixture consists of 10-99 wt.-% of polymer A and 90-1 wt.-% of polymer B.

**13.** Compatible polymer mixture PM according to claims 1 to 12, characterised in that the mixture is made up of 50-90 wt.-% of polymer A and 50-10 wt.-% of polymer B.

**14.** Compatible polymer mixture PM according to claims 1 to 12, characterised in that the mixture is made up of 20-80 wt.-% of polymer A and 80-20 wt.-% of polymer B.

**15.** Compatible polymer mixture PM according to claims 1 to 14, characterised in that at least one of the polymers A and B has a glass transition temperature Tg above 70 °C.

**16.** Compatible polymer mixture PM according to claims 1 to 14, characterised in that the polymer mixture PM has a glass transition temperature Tg above 70 °C.

**17.** Compatible polymer mixture PM according to claims 1 to 14, characterised in that the polymer component B has a glass transition temperature Tg below 40 °C.

**18.** Compatible polymer mixture PM according to claim 17, characterised in that the polymer component B has a glass transition temperature below 20 °C.

**19.** Compatible polymer mixture PM according to claims 1 to 18, characterised in that the polymer mixture PM exhibits a cloud point when heated.

**20.** Compatible polymer mixture PM according to claims 1 to 19, characterised in that the polymer mixture has a cloud point above 25 °C.

**21.** Compatible polymer mixture PM according to claim 20, characterised in that the polymer mixture has a cloud point above 60 °C.

**22.** Compatible polymer mixture PM according to claim 21, characterised in that the polymer mixture has a cloud point above 180 °C.

**23.** Compatible polymer mixture PM according to claims 1 to 22, characterised in that the molecular weight MW of polymer A and polymer B is greater than 3000.

**24.** Compatible polymer mixture PM according to claims 1 to 22, characterised in that at least one of the two polymers A and B has a molecular weight MW $\geqq$ 5000.

**25.** Compatible polymer mixture PM according to claims 1 to 22, characterised in that at least one of the two polymers has a molecular weight MW in the range from 5000 to 1000000.

**26.** Compatible polymer mixture PM according to claims 1 to 22, characterised in that both polymer A and polymer B have a molecular weight MW in the range from 20000 to 500000.

**27.** Compatible polymer mixture PM according to claims 1 to 26, characterised in that the transmittance (measured on a test piece 3mm thick) is greater than 88%.

**28.** Compatible polymer mixture PM according to claims 1 to 27, characterised in that the haze is less than 10%.

**29.** Polymer composition consisting of 40-99 wt.-% of the polymer mixture PM according to claims 1 to 28 and 60-1 wt.-% of another polymer P3 which is chemically distinguishable from A and B and is incompatible with A, B and PM.

**30.** Polymer composition according to claim 29, characterised in that the refractive index of the polymer mixture PM ($n_{DPM}$) at ambient temperature coincides with the refractive index of the polymer P3 ($n_{DP3}$), so that: $n_D25_{PM}$ - $n_D25_{P3}$ is less than 0.01.

**31.** Polymer composition according to claims 29 and 30, characterised in that the glass transition temperature Tg of the polymer P3 is below 20 °C.

**32.** Polymer composition according to claims 29 to 31, characterised in that the polymer P3 is at least partially covalently bonded to the polymers A and/or B.

**33.** Polymer composition according to claims 29 to 32, characterised in that the polymer P3 is cross-linked.

**34.** Polymer composition according to claims 29 to 33, characterised in that the polymer P3 is polybutadiene or polyisoprene.

**35.** Articles consisting of the compatible polymer mixtures according to claims 1 to 34.

**36.** Articles consisting of the compatible polymer mixture PM according to claims 1 to 35 with a coating of polymer B.

**37.** Weather-resistant articles according to claim 36, characterised in that the polymer P2 contains a UV-absorber optionally polymerised therein in amounts of from 0.1-20 wt.-% (based on the polymer B).

**38.** Injection moulded articles according to claims 35 to 37.

**39.** Extruded articles according to claims 35 to 37.

**40.** Data storage disk, more particularly for optically readable information, according to claims 35-39.

**41.** Optical gradient fibres having a core of polymer A and a shell of polymer B and an intermediate layer of a compatible polymer mixture according to claim 1.

**42.** Thermotropic protective glazing containing a polymer mixture PM according to claims 19 to 22.

**43.** Solutions of polymer mixtures PM according to claim 1.

**44.** Polymer film obtained from solutions according to claim 43.

**Revendications**

**1.** Mélanges de polymères compatibles comprenant deux composants polymères différents l'un de l'autre, caractérisés en ce que le mélange de polymères MP consiste en

A) 0,1 à 99,9% en poids d'un polymère A qui est constitué pour au moins 20% en poids et jusqu'à 100% en poids de styrène et

B) 99,9 à 0,1% en poids d'un polymère B qui est constitué pour au moins 10% en poids et jusqu'à 100% en poids de monomères de la formule (I)

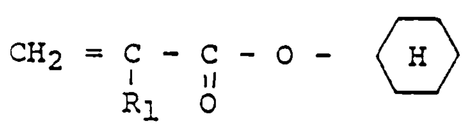

(I)

dans laquelle $R_1$ est mis pour de l'hydrogène ou un radical méthyle,

étant spécifié que le polymère A a éventuellement une teneur en $\alpha$-méthylstyrène inférieure à 20% en poids, et que la fraction des monomères très polaires formée à partir du groupe consistant en (méth)-acrynolitrile, anhydride maléïque, imides de l'acide maléïque, p-(2-hydroxyhexafluoroisopropyl)styrène et alcool allylique est inférieure à 10% en poids.

**2.** Mélanges de polymères compatibles MP comprenant deux composants polymères suivant la revendication 1, caractérisés en ce que le composant polymère A est constitué pour au moins 50% en poids de styrène.

**3.** Mélanges de polymères compatibles MP comprenant deux composants polymères suivant la revendication 1 ou 2, caractérisés en ce que le composant polymère A est constitué pour au moins 90% en poids de styrène.

**4.** Mélanges de polymères compatibles MP comprenant deux composants polymères suivant l'une

quelconque des revendications 1 à 3, caractérisés en ce que le composant polymère A est constitué pour au moins 99% en poids de styrène.

5. Mélanges de polymères compatibles MP comprenant deux composants polymères suivant l'une quelconque des revendications 1 à 4, caractérisés en ce que le composant polymère B est constitué pour 20 à 90% en poids de monomères de la formule (I).

6. Mélanges de polymères compatibles MP comprenant deux composants polymères suivant l'une quelconque des revendications 1 à 5, caractérisés en ce que le composant polymère B est constitué pour 30 à 80% en poids de monomères de la formule (I).

7. Mélanges de polymères compatibles MP suivant l'une quelconque des revendications 1 à 4, caractérisés en ce que le composant polymère B est constitué pour 20 à 90% en poids de monomères de la formule (I) et pour 80 à 10% en poids d'esters acryliques et/ou méthacryliques d'alcools non-alicycliques contenant 1-12 atomes de carbone et/ou d'esters acryliques et/ou méthacryliques d'alcanols cycliques éventuellement substitués contenant 4 ou 5 ou 7-12 atomes de carbone dans le cycle et/ou de cyclohexanols substitués contenant 7-12 atomes de carbone.

8. Mélange de polymères compatibles MP comprenant deux composants polymères suivant l'une quelconque des revendications 1 à 4, caractérisé en ce que le composant polymère B est constitué pour 80-10% en poids de méthacrylate de méthyle et pour 20-90% en poids de monomères de la formule (I).

9. Mélange de polymères compatibles MP suivant la revendication 1, caractérisé en ce que le composant polymère A est constitué pour 1 - <20% en poids d'$\alpha$-méthylstyrène et/ou de p-méthylstyrène.

10. Mélange de polymères compatibles MP suivant la revendication 1, caractérisé en ce que le composant polymère A est constitué pour 1 - <20% en poids d'un monomère de la formule (II)

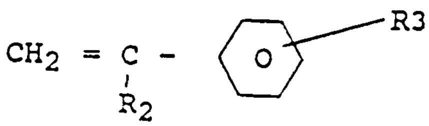

(II)

dans laquelle $R_2$ est mis pour de l'hydrogène ou un radical méthyle et $R_3$ pour un reste alkyle $C_nH_{2n+1}$ avec n = 1 - 8.

11. Mélange de polymères compatibles MP suivant l'une quelconque des revendications 1 à 10, caractérisé en ce que la teneur en monomères polaires choisis dans le groupe (méth)acrylonitrile, anhydride d'acide maléïque, imide d'acide maléïque, p-(2-hydroxyhexafluoroisopropyl)styrène et alcool allylique, dans le composant polymère A, est inférieure à 5% en poids.

12. Mélange de polymères compatibles MP suivant l'une quelconque des revendications 1 à 11, caractérisé en ce que le mélange est constitué de 10-99% en poids de polymère A et de 90-1% en poids de polymère B.

13. Mélange de polymères compatibles MP suivant l'une quelconque des revendications 1 à 12, caractérisé en ce que le mélange est constitué de 50-90% en poids de polymère A et de 50-10% en poids de polymère B.

14. Mélange de polymères compatibles MP suivant l'une quelconque des revendications 1 à 12, caractérisé en ce que le mélange est constitué de 20-80% en poids de polymère A et 80-20% en poids de polymère B.

15. Mélange de polymères compatibles MP suivant l'une quelconque des revendications 1 à 14, caractérisé en ce que l'un au moins des polymères A et B présente une température de transition vitreuse $T_g$

supérieure à 70 ° C.

**16.** Mélange de polymères compatibles MP suivant l'une quelconque des revendications 1 à 14, caractérisé en ce que le mélange de polymères MP présente une température de transition vitreuse $T_g$ > 70 ° c.

**17.** Mélange de polymères compatibles MP suivant l'une quelconque des revendications 1 à 14, caractérisé en ce que le composant polymère B présente une température de transition vitreuse $T_g$ inférieure à 40 ° C.

**18.** Mélange de polymères compatibles MP suivant la revendication 17, caractérisé en ce que le composant polymère B présente une température de transition vitreuse inférieure à 20 ° C.

**19.** Mélange de polymères compatibles MP suivant l'une quelconque des revendications 1 à 18, caractérisé en ce que le mélange de polymères MP présente, lorsqu'on le chauffe, un point de trouble.

**20.** Mélange de polymères compatibles MP suivant l'une quelconque des revendications 1 à 19, caractérisé en ce que le mélange de polymères présente un point de trouble > 25 ° C.

**21.** Mélange de polymères compatibles MP suivant la revendication 20, caractérisé en ce que le mélange de polymères présente un point de trouble > 60 ° C.

**22.** Mélange de polymères compatibles MP suivant la revendication 21, caractérisé en ce que le mélange de polymères présente un point de trouble > 180 ° C.

**23.** Mélange de polymères compatibles MP suivant l'une quelconque des revendications 1 à 22, caractérisé en ce que la masse moléculaire MW du polymère A et du polymère B est > 3000.

**24.** Mélange de polymères compatibles MP suivant l'une quelconque des revendications 1 à 22, caractérisé en ce que l'un au moins des deux polymères A et B présente une masse moléculaire MW ≧ 5.000.

**25.** Mélange de polymères compatibles MP suivant l'une quelconque des revendications 1 à 22, caractérisé en ce que l'un au moins des deux polymères présente une masse moléculaire MW dans le domaine 5.000-1.000.000.

**26.** Mélange de polymères compatibles MP suivant l'une quelconque des revendications 1 à 22, caractérisé en ce qu'aussi bien le polymère A que le polymère B présentent une masse moléculaire MW dans le domaine 20.000 - 500.000.

**27.** Mélange de polymères compatibles MP suivant l'une quelconque des revendications 1 - 26, caractérisé en ce que la transparence, mesurée sur une éprouvette de 3 mm d'épaisseur, est supérieure à 88%.

**28.** Mélange de polymères compatibles MP suivant l'une quelconque des revendication 1 à 27, caractérisé en ce que le trouble est < 10%.

**29.** Composition de polymères comprenant 40 - 99% en poids du mélange de polymères MP suivant l'une quelconque des revendications 1 à 28 et 60-1% en poids d'un autre polymère P3, chimiquement différenciable de A et B et qui n'est pas compatible avec A, B et MP.

**30.** Composition de polymères suivant la revendication 29, caractérisée en ce que l'indice de réfraction du mélange de polymères MP ($n_D25_{MP}$) coïncide à la température ambiante avec l'indice de réfraction du polymère P3 ($n_D25_{P3}$), si bien que l'on a la relation : $n_D25_{PM} - n_D25_{P3} < 0,01$.

**31.** Composition de polymères suivant la revendication 29 ou 30, caractérisée en ce que la température de transition vitreuse $T_g$ du polymère P3 est inférieure à 20 ° C.

**32.** Composition de polymères suivant l'une quelconque des revendications 29 à 31, caractérisée en ce que le polymère P3 est, au moins en partie, lié par une liaison de covalence aux polymères A et/ou B.

**33.** Compositions de polymères suivant l'une quelconque des revendications 29 à 32, caractérisées en ce que le polymère P3 est réticulé.

**34.** Compositions de polymères suivant l'une quelconque des revendications 29 à 33, caractérisées en ce que le polymère P3 est du polybutadiène ou du polyisoprène.

**35.** Objets formés avec les mélanges de polymères compatibles suivant l'une quelconque des revendications 1 à 34.

**36.** Objets formés avec le mélange de polymères compatibles MP suivant l'une quelconque des revendications 1 à 35, ayant un revêtement de polymère B.

**37.** Objets résistant aux conditions météorologiques suivant la revendication 36, caractérisés en ce que le polymère B contient, éventuellement en liaison polymère, un absorbant des rayons UV, en des proportions de 0,1 à 20% en poids par rapport au polymère B.

**38.** Corps moulés par injection suivant l'une quelconque des revendications 35 à 37.

**39.** Corps moulés par extrusion suivant l'une quelconque des revendications 35 à 37.

**40.** Disque de stockage de données, en particulier pour des informations lisibles par voie optique, suivant l'une quelconque des revendications 35 à 39.

**41.** Fibre optique à gradient d'indice ayant une âme en polymère A et une enveloppe en polymère B et une couche intermédiaire en un mélange de polymères compatibles selon la revendication 1.

**42.** Vitrage protecteur thermotrope contenant un mélange de polymères MP suivant l'une quelconque des revendications 19 à 22.

**43.** Solutions de mélanges de polymères MP suivant la revendication 1.

**44.** Film en polymères formé à partir de solutions suivant la revendication 43.

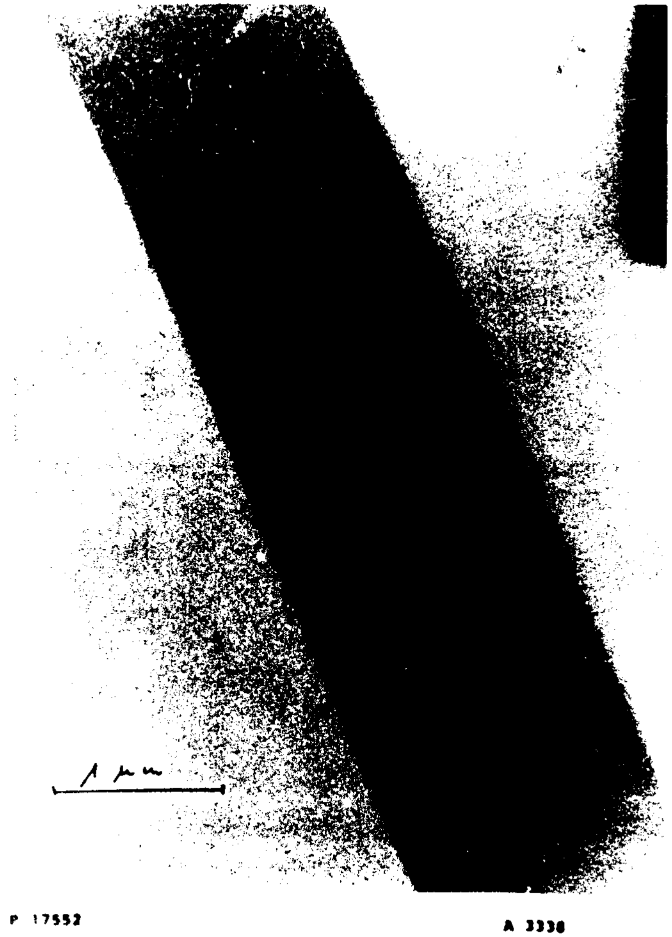


Abbildung 1
Datenspeicherplatte mit verträglicher Polymermischung PM26 (Raumtemperatur)

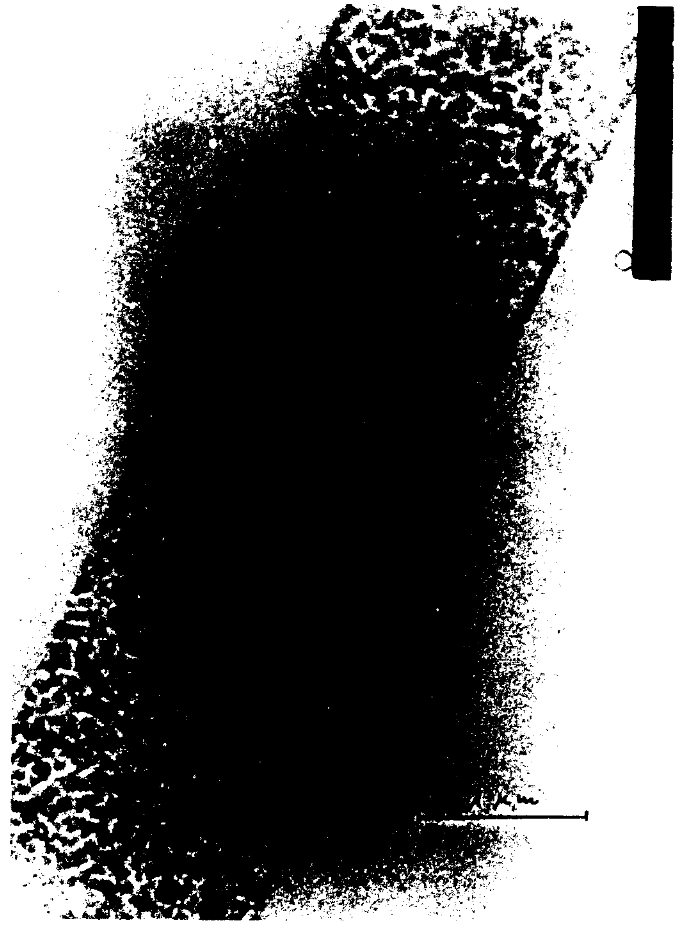

Abbildung 2
Datenspeicherplatte mit Polymermischung PM26 (auf 130 Grad C erwärmt und abgeschreckt)

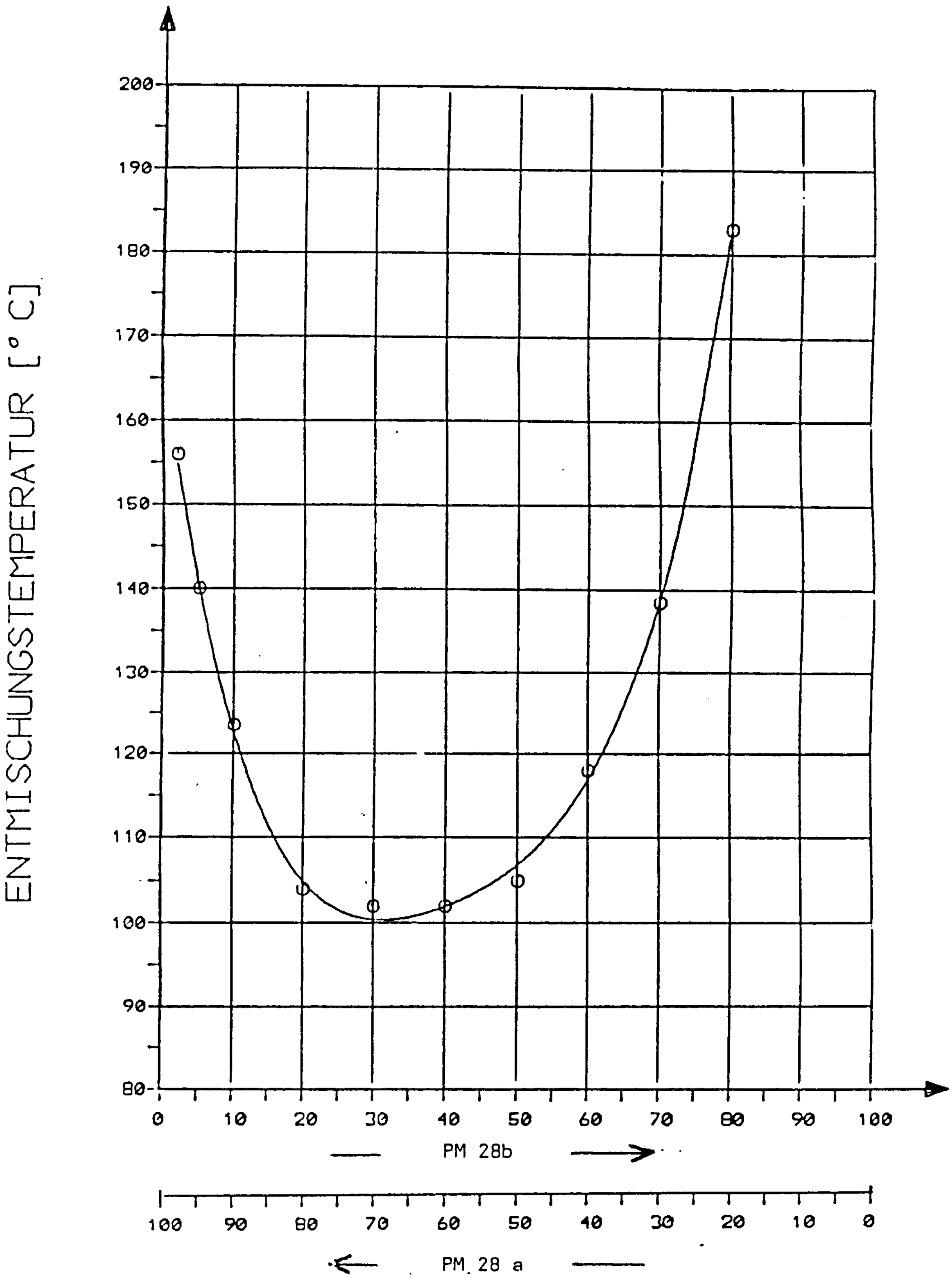


Abb. 3: Phasendiagramm der Polymermischung PM 28